(19) Europäisches Patentamt
European Patent Office
Office européen des brevets

(11) **EP 2 330 581 A1**

(12) **EUROPEAN PATENT APPLICATION**
published in accordance with Art. 153(4) EPC

(43) Date of publication:
08.06.2011 Bulletin 2011/23

(51) Int Cl.:
*G08G 1/16* (2006.01)   *B60R 1/00* (2006.01)
*B60R 21/00* (2006.01)   *H04N 5/225* (2006.01)
*H04N 7/18* (2006.01)

(21) Application number: 09816045.0

(22) Date of filing: 07.09.2009

(86) International application number:
PCT/JP2009/065575

(87) International publication number:
WO 2010/035628 (01.04.2010 Gazette 2010/13)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 25.09.2008 JP 2008245213

(71) Applicant: Sanyo Electric Co., Ltd.
Osaka 570-8677 (JP)

(72) Inventor: HONGO, Hitoshi
Moriguchi-shi
Osaka 570-8677 (JP)

(74) Representative: Glawe, Delfs, Moll
Patent- und Rechtsanwälte
Postfach 26 01 62
80058 München (DE)

(54) **STEERING ASSISTANCE DEVICE**

(57)  A laser irradiator L_N (N: 1 to 4) is arranged in an automobile and radiates a laser beam obliquely downward. A camera C_N arranged on the automobile has a viewing field VW_N corresponding to a radiating direction of the laser irradiator L_N. A CPU determines whether or not a change amount of a reflection position of the laser beam radiated by the laser irradiator L_N exceeds a reference, based on output of the camera C_N. The radiating direction of the laser irradiator L_N is changed by the CPU when a determined result is updated from a negative result to a positive result. A manner of changing in the reflection position of the laser beam radiated by the laser irradiator L_N is detected by the CPU based on the output of the camera C_N parallel to a changing process for the radiating direction. The CPU outputs a different notification corresponding to the detected result toward a driver of the automobile.

FIG.11

(A) SIDE SURFACE

(B) TOP SURFACE

**Description**

**TECHNICAL FIELD**

The present invention relates to a maneuvering assisting apparatus. More specifically, the present invention relates to a maneuvering assisting apparatus which is arranged in a moving body such as an automobile and detects an obstacle in a surrounding area.

**BACKGROUND ART**

One example of this type of an apparatus is disclosed in a patent literature 1. According to the background art, a floodlight device floodlights a spot light beam at a plurality of floodlight angles different from each other toward a road surface rearward of a vehicle. A video rearward of the vehicle including a light spot of the floodlighted spot light beam is captured by a camera. A control unit detects the light spot from the video captured by the camera, and calculates a state of the road surface rearward of the vehicle based on a detected result. Furthermore, with reference to the calculated state of the road surface, the control unit determines a range which has a problem with the vehicle passing, and displays an image representing the determined range on a display.

**CITATION LIST**

**PATENT LITERATURE**

Patent Literature 1 : Japanese Patent Application Laid-open Number 2002-36987

**SUMMARY OF INVENTION**

**TECHNICAL PROBLEM**

However, according to the background art, it is necessary to continuously change the floodlight angle of the spot light beam in order to calculate the state of the road surface. In other words, a complicated process is required to calculate the state of the road surface based on the spot light beam thus floodlighted.

**SOLUTION TO PROBLEM**

A maneuvering assisting apparatus according to this invention comprises: a radiating means, arranged in a moving body, which radiates a light beam obliquely downward; an imaging means, arranged in the moving body, which has a viewing field corresponding to a radiating direction of the radiating means; a determining means which determines whether or not a change amount in a reflection position of the light beam radiated by the radiating means exceeds a reference, based on output of the imaging means; a changing means which changes the radiating direction of the radiating means when a determined result of the determining means is updated from a negative result to a positive result; a detecting means which detects a manner of changing in the reflection position of the light beam radiated by the radiating means based on the output of the imaging means parallel to a changing process of the changing means; and a notifying means which outputs a different notification corresponding to a detected result of the detecting means toward an operator of the moving body.

Preferably, the radiating means radiates a linear light beam extending in right and left directions of the viewing field of the imaging means, and the changing means changes the radiating direction to an upper direction.

Preferably, the detecting means includes a first notifying means which outputs the notification in a first manner when the detected result of the detecting means indicates the reflecting light beam being disappeared, and a second notifying means which outputs the notification in a second manner when the detected result of the detecting means indicates at least one portion of the reflecting light beams being detected.

Preferably, further comprised is a creating means which creates a bird's eye view image based on the output of the imaging means, and the determining means and the detecting means respectively execute a determining process and a detecting process with reference to the bird's eye view image created by the creating means.

Preferably, the imaging means includes a plurality of cameras arranged on a periphery of the moving body, the radiating means includes a plurality of laser irradiators respectively allocated to the plurality of cameras, and further comprised is an updating means which repeatedly updates a camera and a laser irradiator noticed for the determining process of the determining means.

Preferably, further comprised is a setting means which sets an updating manner of the updating means to a different manner corresponding to at least one of a moving speed of the moving body and a moving direction of the moving body.

Preferably, further comprised is an adjusting means which adjusts an imaging direction of the imaging means and the radiating direction of the radiating means with reference to at least one of the moving speed of the moving body and the moving direction of the moving body, and the changing means executes a radiating-direction changing process by using the radiating direction adjusted by the adjusting means as a reference.

A maneuvering assisting program product according to the present invention is a maneuvering assisting program product executed by a processor of a maneuvering assisting apparatus provided with a radiating means, arranged in a moving body, which radiates a light beam obliquely downward and an imaging means, arranged in the moving body, which has a viewing field corresponding to a radiating direction of the radiating means, comprises: a determining step of determining whether or not a change amount in a reflection position of the light beam radiated by the radiating means exceeds a reference, based on output of the imaging means; a changing step of changing the radiating direction of the radiating means when a determined result of the determining step is updated from a negative result to a positive result; a detecting step of detecting a manner of changing in the reflection position of the light beam radiated by the radiating means based on the output of the imaging means parallel to a changing process of the changing step; and a notifying step of outputting a different notification corresponding to a detected result of the detecting step toward an operator of the moving body.

A maneuvering assisting method according to the present invention is a maneuvering assisting method executed by a maneuvering assisting apparatus provided with a radiating means, arranged in a moving body, which radiates a light beam obliquely downward and an imaging means, arranged in the moving body, which has a viewing field corresponding to a radiating direction of the radiating means, comprises: a determining step of determining whether or not a change amount in a reflection position of the light beam radiated by the radiating means exceeds a reference, based on output of the imaging means; a changing step of changing the radiating direction of the radiating means when a determined result of the determining step is updated from a negative result to a positive result; a detecting step of detecting a manner of changing in the reflection position of the light beam radiated by the radiating means based on the output of the imaging means parallel to a changing process of the changing step; and a notifying step of outputting a different notification corresponding to a detected result of the detecting step toward an operator of the moving body.

The above described objects and other objects, features and advantages of the present invention will become more apparent from the following detailed description when taken in conjunction with the accompanying drawings.

## BRIEF DESCRIPTION OF THE DRAWINGS

[FIG.1] Figure 1 is a block diagram showing a configuration of one embodiment of the present invention.
[FIG.2] (A) is an illustrative view showing a state where a front side of an automobile is seen, (B) is an illustrative view showing a state where a right side of the automobile is seen, (C) is an illustrative view showing a state where a rear side of the automobile is seen, (D) is an illustrative view showing a state where a left side of the automobile is seen.
[FIG.3] Figure 3 is an illustrative view showing one example of a bright line of a laser beam irradiated by a plurality of laser irradiators attached to the automobile and a viewing field captured by a plurality of cameras attached to the automobile.
[FIG.4] (A) is an illustrative view showing one example of a bird's-eye view image based on output of a front camera, (B) is an illustrative view showing one example of a bird's-eye view image based on output of a right camera, (C) is an illustrative view showing one example of a bird's-eye view image based on output of a left camera, (D) is an illustrative view showing one example of a bird's-eye view image based on output of a rear camera.
[FIG.5] Figure 5 is an illustrative view showing one example of a whole-circumference bird's-eye view image based on the bird's-eye view images shown in Figure 4(A) to Figure 4(D).
[FIG.6] Figure 6 is an illustrative view showing one example of a maneuvering assisting image displayed by a display device.
[FIG.7] Figure 7 is an illustrative view showing an angle of a camera attached to a vehicle.
[FIG.8] Figure 8 is an illustrative view showing a relationship among a camera coordinate system, a coordinate system of an imaging surface, and a world coordinate system.
[FIG.9] (A) is an illustrative view showing one example of a state where a side surface of an automobile moving rearward toward an obstacle is seen, (B) is an illustrative view showing one example of a state where a top surface of the automobile moving rearward toward the obstacle is seen.

[FIG.10] (A) is an illustrative view showing another example of the state where the side surface of the automobile moving rearward toward the obstacle is seen, (B) is an illustrative view showing another example of the state where the top surface of the automobile moving rearward toward the obstacle is seen.

[FIG.11] (A) is an illustrative view showing still another example of the state where the side surface of the automobile moving rearward toward the obstacle is seen, (B) is an illustrative view showing still another example of the state where the top surface of the automobile moving rearward toward the obstacle is seen.

[FIG.12] (A) is an illustrative view showing one example of a state where a side surface of the automobile moving rearward toward another obstacle is seen, (B) is an illustrative view showing one example of a state where a top surface of the automobile moving rearward toward another obstacle is seen.

[FIG.13] (A) is an illustrative view showing another example of the state where the side surface of the automobile moving rearward toward another obstacle is seen, (B) is an illustrative view showing another example of the state where the top surface of the automobile moving rearward toward another obstacle is seen.

[FIG.14] (A) is an illustrative view showing still another example of the state where the side surface of the automobile moving rearward toward another obstacle is seen, (B) is an illustrative view showing still another example of the state where the top surface of the automobile moving rearward toward another obstacle is seen.

[FIG.15] Figure 15 is a flowchart showing one portion of an operation of a CPU applied to the embodiment in Figure 1.

[FIG.16] Figure 16 is a flowchart showing another portion of the operation of the CPU applied to the embodiment in Figure 1.

[FIG.17] Figure 17 is a flowchart showing still another portion of the operation of the CPU applied to the embodiment in Figure 1.

[FIG.18] Figure 18 is a block diagram showing a configuration of another embodiment.

[FIG.19] Figure 19 is a flowchart showing one portion of an operation of a CPU applied to the embodiment in Figure 18.

[FIG.20] Figure 20 is a flowchart showing another portion of the operation of the CPU applied to the embodiment in Figure 18.

[FIG.21] Figure 21 is a flowchart showing still another portion of the operation of the CPU applied to the embodiment in Figure 18.

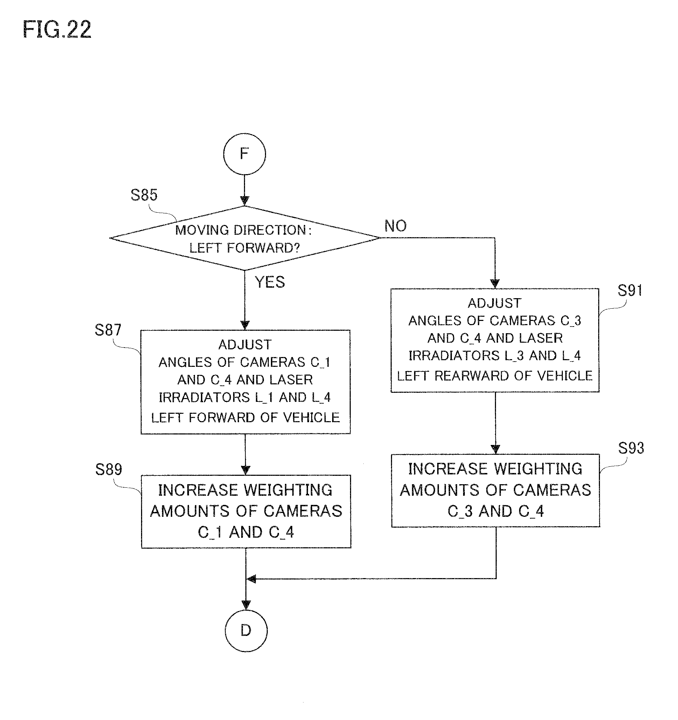

[FIG.22] Figure 22 is a flowchart showing yet another portion of the operation of the CPU applied to the embodiment in Figure 18.

**DESCRIPTION OF EMBODIMENTS**

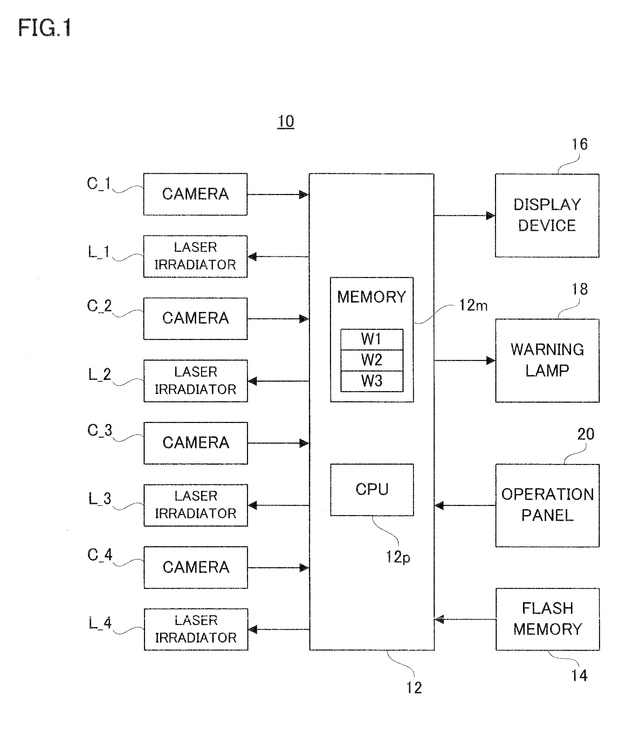

A maneuvering assisting apparatus 10 of this embodiment shown in Figure 1 includes four laser irradiators L_1 to L_4 and four cameras C_1 to C_4. Each of the laser irradiators L_1 to L_4 generates a laser beam which has a wavelength belonging to a near-infrared region and linearly extends in a horizontal direction. Moreover, the cameras C_1 to C_4 respectively output scene images P_1 to P_4 for each 1/30 seconds, in response to a common vertical synchronization signal Vsync. The outputted scene images P_1 to P_4 are taken by an image processing circuit 12.

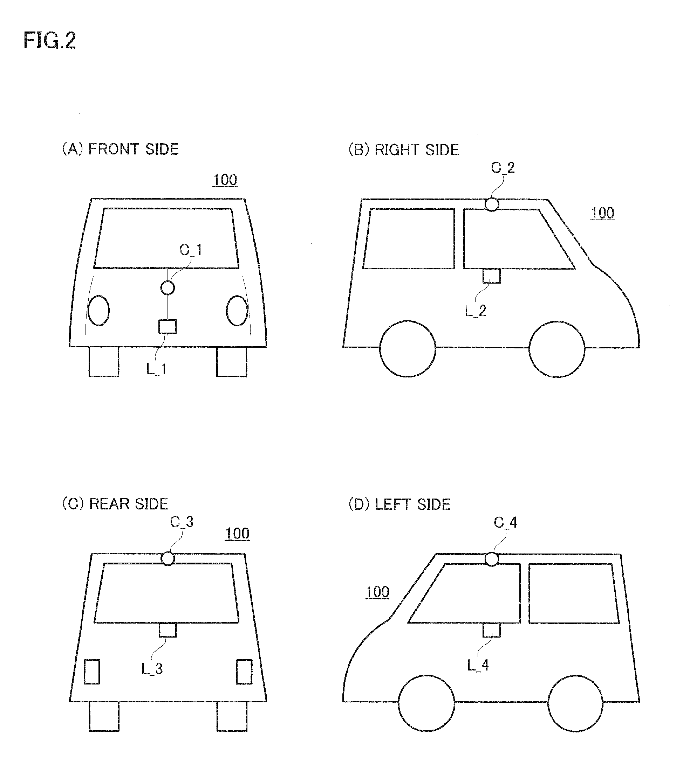

With reference to Figure 2(A) to Figure 2(D), the maneuvering assisting apparatus 10 is mounted on an automobile 100 traveling on a ground. Specifically, the laser irradiator L_1 is installed at the center in a width direction of a front portion and on a lower side in a height direction of the automobile 100, and oriented forward, obliquely downward of the automobile 100. The camera C_1 is installed near the center of a front portion of the automobile 100 and oriented forward, obliquely downward of the automobile 100.

The laser irradiator L_2 is installed near the center on a right side of the automobile 100 and oriented rightward, obliquely downward of the automobile 100. The camera C_2 is installed near the center in a width direction on a right side and on an upper side in a height direction of the automobile 100, and oriented rightward, obliquely downward of the automobile 100.

The laser irradiator L_3 is installed near the center of a rear portion of the automobile 100, and oriented rearward, obliquely downward of the automobile 100. The camera C_3 is installed near the center in a width direction of a rear portion and on an upper side in a height direction of the automobile 100, and oriented rearward, obliquely downward of the automobile 100.

The laser irradiator L_4 is installed near the center on a left side of the automobile 100, and oriented leftward, obliquely downward direction of the automobile 100. The camera C_4 is installed near the center in a width direction on a left side and on an upper side in a height direction of the automobile 100, and oriented leftward, obliquely downward direction of the automobile 100.

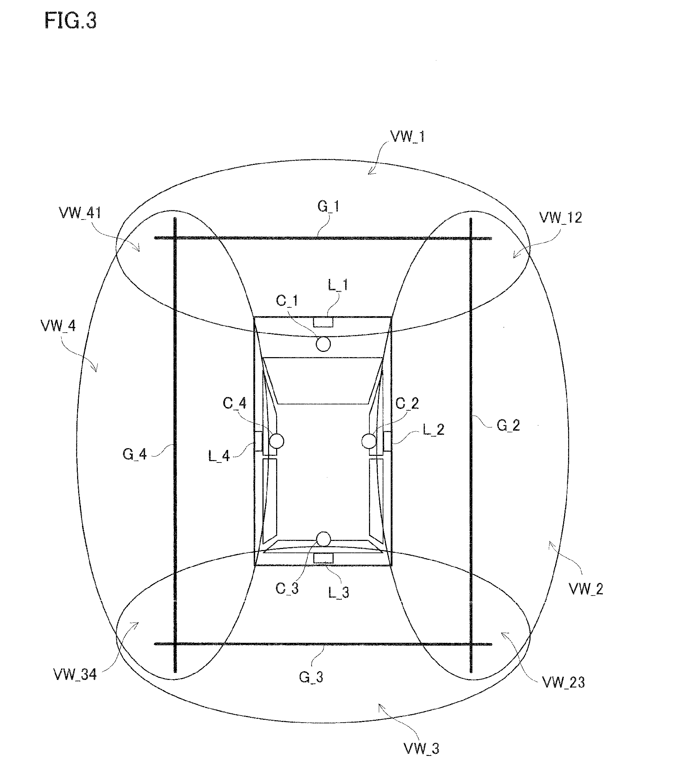

A state where the automobile 100 and its surrounding grounds in which no obstacle exists are looked down is shown in Figure 3. According to Figure 3, the laser beam radiated from the laser irradiator L_1 depicts a bright line G_1 extending right and left on a ground in front of the automobile 100. The laser beam radiated from the laser irradiator L_2 depicts a bright line G_2 extending front and rear on a ground in the right side of the automobile 100. The laser beam radiated from the laser irradiator L_3 depicts a bright line G_3 extending right and left on a ground in the rear of the automobile 100. The laser beam radiated from the laser irradiator L_4 depicts a bright line G_4 extending front and rear on a ground in the left side of the automobile 100.

The camera C_1 has a viewing field VW_1 capturing a front of the automobile 100, the camera C_2 has a viewing field VW_2 capturing a right direction of the automobile 100, the camera C_3 has a viewing field VW _3 capturing a rear of the automobile 100, and the camera C_4 has a viewing field VW_4 capturing a left direction of the automobile 100. Moreover, the viewing fields VW_1 and VW_2 have a common viewing field VW_12, the viewing fields VW_2 and VW_3 have a common viewing field VW_23, the viewing fields VW_3 and VW_4 have a common viewing field VW_34, and the viewing fields VW_4 and VW_1 have a common viewing field VW_41.

That is, in a state where no obstacle exists in a surrounding area of the automobile 100, all the bright lines G_1 to G_4 extend linearly and the bright lines G_1 to G_4 are respectively captured by the cameras C_1 to C_4.

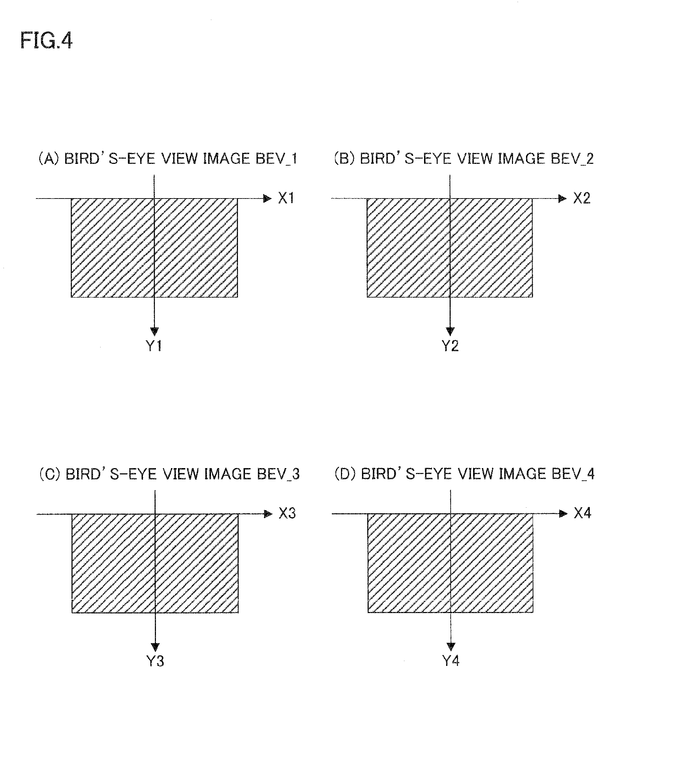

Returning to Figure 1, a CPU 12p arranged in the image processing circuit 12 produces a bird's-eye view image BEV_1 shown in Figure 4(A) based on the scene image P_1 outputted from the camera C_1, and produces a bird's-eye view image BEV_2 shown in Figure 4(B) based on the scene image P_2 outputted from the camera C_2. Moreover, the CPU 12p produces a bird's-eye view image BEV_3 shown in Figure 4(C) based on the scene image P_3 outputted from the camera C_3, and produces a bird's-eye view image BEV_4 shown in Figure 4(D) based on the scene image P_4 outputted from the camera C_4.

The bird's-eye view image BEV_1 is equivalent to an image captured by a virtual camera looking perpendicularly down on the viewing field VW_1, and the bird's-eye view image BEV_2 is equivalent to an image captured by a virtual camera looking perpendicularly down on the viewing field VW_2. Moreover, the bird's-eye view image BEV _3 is equivalent to an image captured by a virtual camera looking perpendicularly down on the viewing field VW_3, and the bird's-eye view image BEV_4 is equivalent to an image captured by a virtual camera looking perpendicularly down on the viewing field VW_4.

According to Figure 4(A) to Figure 4(D), the bird's-eye view image BEV_1 has a bird's-eye-view coordinate system (X1, Y1), the bird's-eye view image BEV_2 has a bird's-eye-view coordinate system (X2, Y2), the bird's-eye view image BEV_3 has a bird's-eye-view coordinate system (X3, Y3), and the bird's-eye view image BEV_4 has a bird's-eye-view coordinate system (X4, Y4). The bird's-eye view images BEV_1 to BEV_4 are held in a work area W1 of a memory 12m.

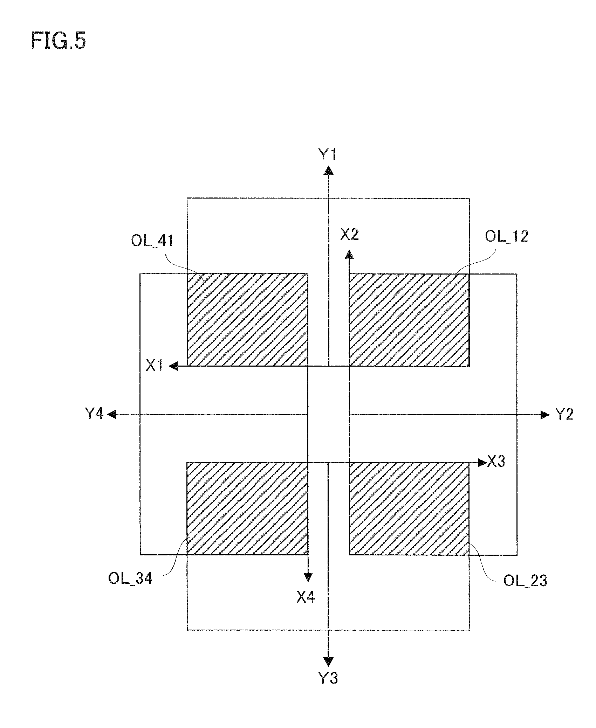

Subsequently, the CPU 12p joins the bird's-eye view images BEV_1 to BEV_4 each other by a coordinate conversion. The bird's-eye view images BEV_2 to BEV_4 are rotated and/or moved by using the bird's-eye view image BEV_1 as a reference, and as a result, a whole-circumference bird's-eye view image shown in Figure 5 is obtained in a work area W2 of the memory 12m.

In Figure 5, an overlapped area OL_12 is equivalent to an area for reproducing the common viewing field VW_12, and an overlapped area OL_23 is equivalent to an area for reproducing the common viewing field VW_23. Moreover, an overlapped area OL_34 is equivalent to an area for reproducing the common viewing field VW_34, and an overlapped area OL_41 is equivalent to an area for reproducing the common viewing field VW_41.

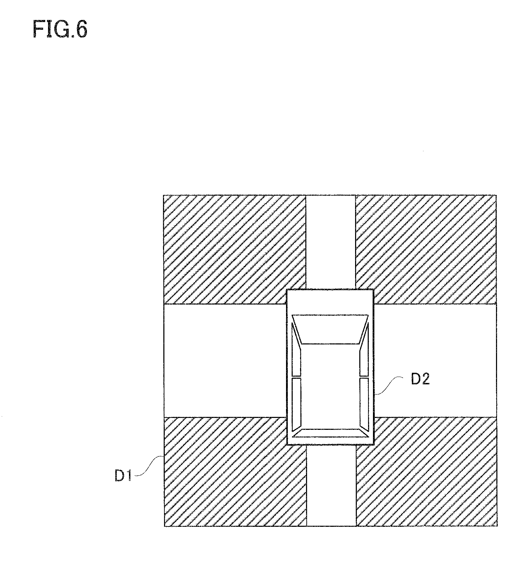

A display device 16 installed in a driver's seat of the automobile 100 extracts a partial image D1 in which the overlapped areas OL_12 to OL_41 are located at four corners, and pastes a vehicle image D2 resembling an upper portion of the automobile 100 at a center of the extracted image D1. As a result, a maneuvering assisting image shown in Figure 6 is displayed on a monitor screen.

Subsequently, a manner of creating the bird's-eye view images BEV_1 to BEV_4 is described. It is noted that all the bird's-eye view images BEV_1 to BEV_4 are created according to the same manner, and therefore, on behalf of all the bird's-eye view images BEV_1 to BEV_4, the manner of creating the bird's-eye view image BEV_3 is described.

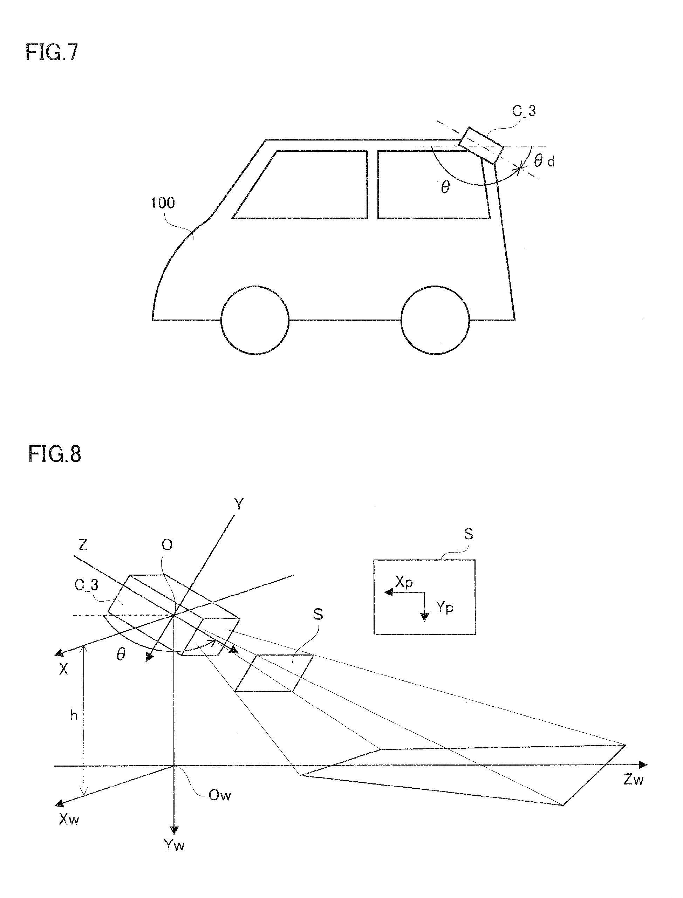

With reference to Figure 7, the camera C_3 is placed to be orientated rearward, obliquely downward of the rear portion of the automobile 100. If an angle of depression of the camera C_3 is assumed as "θd", an angle θ shown in Figure 7 is equivalent to "180 degrees-θd". Furthermore, the angle θ is defined in a range of 90 degrees<θ<180 degrees.

Figure 8 shows a relationship among a camera coordinate system (X, Y, Z), a coordinate system (Xp, Yp) of an imaging surface S of the camera C_3, and a world coordinate system (Xw, Yw, Zw). The camera coordinate system (X, Y, Z) is a three-dimensional coordinate system where an X axis, Y axis, and Z axis are coordinate axes. The coordinate system (Xp, Yp) is a two-dimensional coordinate system where an Xp axis and Yp axis are coordinate axes. The world coordinate system (Xw, Yw, Zw) is a three-dimensional coordinate system where an Xw axis, Yw axis, and Zw axis are coordinate axes.

In the camera coordinate system (X, Y, Z), an optical center of the camera C3 is used as an origin O, and in this state, the Z axis is defined in an optical axis direction, the X axis is defined in a direction orthogonal to the Z axis and parallel to the ground, and the Y axis is defined in a direction orthogonal to the Z axis and X axis. In the coordinate system (Xp, Yp) of the imaging surface S, a center of the imaging surface S is used as the origin, and in this state, the Xp axis is defined in a lateral direction of the imaging surface S and the Yp axis is defined in a vertical direction of the imaging surface S.

In the world coordinate system (Xw, Yw, Zw), an intersecting point between a perpendicular line passing through the origin O of the camera coordinate system (X, Y, Z) and the ground is used as an origin Ow, and in this state, the Yw axis is defined in a direction vertical to the ground, the Xw axis is defined in a direction parallel to the X axis of the camera coordinate system (X, Y, Z), and the Zw axis is defined in a direction orthogonal to the Xw axis and Yw axis. Also, a distance from the Xw axis to the X axis is "h", and an obtuse angle formed by the Zw axis and the Z axis is equivalent to the above described angle θ.

When coordinates in the camera coordinate system (X, Y, Z) are written as (x, y, z), "x", "y", and "z" respectively indicate an X-axis component, a Y-axis component, and a Z-axis component in the camera coordinate system (X, Y, Z). When coordinates in the coordinate system (Xp, Yp) of the imaging surface S are written as (xp, yp), "xp" and "yp" respectively indicate an Xp-axis component and a Yp-axis component in the coordinate system (Xp, Yp) of the imaging surface S. When coordinates in the world coordinate system (Xw, Yw, Zw) are written as (xw, yw, zw), "xw", "yw", and "zw" respectively indicate an Xw-axis component, a Yw-axis component, and a Zw-axis component in the world coordinate system (Xw, Yw, Zw).

A transformation equation between the coordinates (x, y, z) of the camera coordinate system (X, Y, Z) and the coordinates (xw, yw, zw) of the world coordinate system (Xw, Yw, Zw) is represented by Equation 1 below:

[Equation 1]

$$\begin{bmatrix} x \\ y \\ z \end{bmatrix} = \begin{bmatrix} 1 & 0 & 0 \\ 0 & \cos\theta & -\sin\theta \\ 0 & \sin\theta & \cos\theta \end{bmatrix} \left\{ \begin{bmatrix} xw \\ yw \\ zw \end{bmatrix} + \begin{bmatrix} 0 \\ h \\ 0 \end{bmatrix} \right\}$$

Herein, if a focal length of the camera C_3 is assumed as "f", a transformation equation between the coordinates (xp, yp) of the coordinate system (Xp, Yp) of the imaging surface S and the coordinates (x, y, z) of the camera coordinate system (X, Y, Z) is represented by Equation 2 below:

[Equation 2]

$$\begin{bmatrix} xp \\ yp \end{bmatrix} = \begin{bmatrix} f\dfrac{x}{z} \\ f\dfrac{y}{z} \end{bmatrix}$$

Furthermore, based on Equation 1 and Equation 2, Equation 3 is obtained. Equation 3 shows a transformation equation between the coordinates (xp, yp) of the coordinate system (Xp, Yp) of the imaging surface S and the coordinates (xw, zw) of the two-dimensional ground coordinate system (Xw, Zw).

[Equation 3]

$$\begin{bmatrix} xp \\ yp \end{bmatrix} = \begin{bmatrix} \dfrac{fxw}{h\sin\theta + zw\cos\theta} \\ \dfrac{(h\cos\theta - zw\sin\theta)f}{h\sin\theta + zw\cos\theta} \end{bmatrix}$$

Furthermore, the bird's-eye-view coordinate system (X3, Y3), which is a coordinate system of the bird's-eye view image BEV_3 shown in Figure 4(C), is defined. The bird's-eye-view coordinate system (X3, Y3) is a two-dimensional coordinate system where an X3 axis and Y3 axis are used as coordinate axes. When coordinates in the bird's-eye-view coordinate system (X3, Y3) are written as (x3, y3), a position of each pixel forming the bird's-eye view image BEV_3 is represented by coordinates (x3, y3). "x3" and "y3" respectively indicate an X3-axis component and a Y3-axis component in the bird's-eye-view coordinate system (X3, Y3).

A projection from the two-dimensional coordinate system (Xw, Zw) that represents the ground, onto the bird's-eye-view coordinate system (X3, Y3), is equivalent to a so-called parallel projection. When a height of a virtual camera, i.e., a virtual view point, is assumed as "H", a transformation equation between the coordinates (xw, zw) of the two-dimensional coordinate system (Xw, Zw) and the coordinates (x3, y3) of the bird's-eye-view coordinate system (X3, Y3) is represented by Equation 4 below. A height H of the virtual camera is previously determined.

$$[\text{Equation 4}]$$

$$\begin{bmatrix} x3 \\ y3 \end{bmatrix} = \frac{f}{H} \begin{bmatrix} xw \\ zw \end{bmatrix}$$

Furthermore, based on Equation 4, Equation 5 is obtained, and based on Equation 5 and Equation 3, Equation 6 is obtained. Moreover, based on Equation 6, Equation 7 is obtained. Equation 7 is equivalent to a transformation equation for transforming the coordinates (xp, yp) of the coordinate system (Xp, Yp) of the imaging surface S into the coordinates (x3, y3) of the bird's-eye-view coordinate system (X3, Y3).

$$[\text{Equation 5}]$$

$$\begin{bmatrix} xw \\ zw \end{bmatrix} = \frac{H}{f} \begin{bmatrix} x3 \\ y3 \end{bmatrix}$$

$$[\text{Equation 6}]$$

$$\begin{bmatrix} xp \\ yp \end{bmatrix} = \begin{bmatrix} \dfrac{fHx3}{fhsin\,\theta + Hy3cos\,\theta} \\ \dfrac{f(fhcos\,\theta - Hy3sin\,\theta)}{fhsin\,\theta + Hy3cos\,\theta} \end{bmatrix}$$

[Equation 7]

$$\begin{bmatrix} x3 \\ y3 \end{bmatrix} = \begin{bmatrix} \dfrac{xp(fh\sin\theta + Hy3\cos\theta)}{fH} \\ \dfrac{fh(f\cos\theta - yp\sin\theta)}{H(f\sin\theta + yp\cos\theta)} \end{bmatrix}$$

The coordinates (xp, yp) of the coordinate system (Xp, Yp) of the imaging surface S represent coordinates of the scene image P_3 captured by the camera C_3. Therefore, the scene image P_3 from the camera. C_3 is transformed into the bird's-eye view image BEV_3 by using Equation 7. In reality, the scene image P_3 firstly undergoes an image process such as a lens distortion correction, and is then transformed into the bird's-eye view image BEV_3 using Equation 7.

Subsequently, an operation of detecting the obstacle from a surrounding area of the automobile 100 is described. Firstly, the CPU 12p sets the variable N to any one of "1" to "4", and duplicates a bird's eye view image BEV_N held in the work area W1 into a work area W3 in response to the vertical synchronization signal Vsync. As described with reference to Figure 3, when no obstacle exists in the surrounding area of the automobile 100, the bright lines G_1 to G_4 respectively belong to the viewing fields VW_1 to VW_4. Thus, unless the obstacle exists in the surrounding area, a bright line G_N appears in the duplicated bird's eye view image BEV_N.

The CPU 12p detects the bright line G_N from the bird's eye view image BEV_N, and also detects a change amount of the bright line G_N as "ΔG_N". The detected change amount ΔG_N is equivalent to a difference between the bright line G_N detected in a state where the obstacle does not exist in the surrounding area and the latest bright line G_N, and represents a size of a distortion portion of the bright line G_N which is attributed to the obstacle.

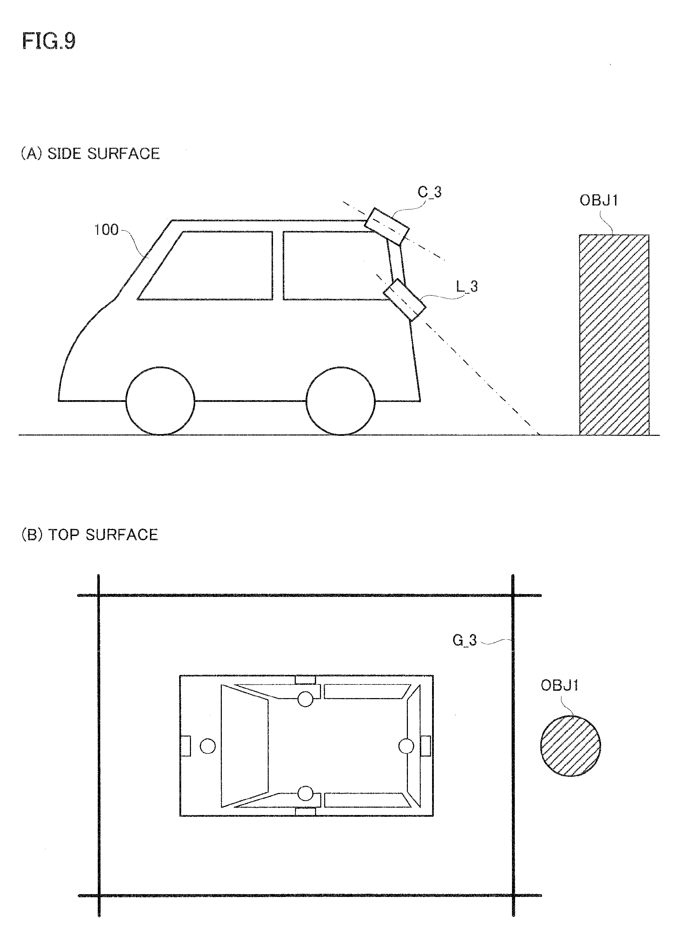

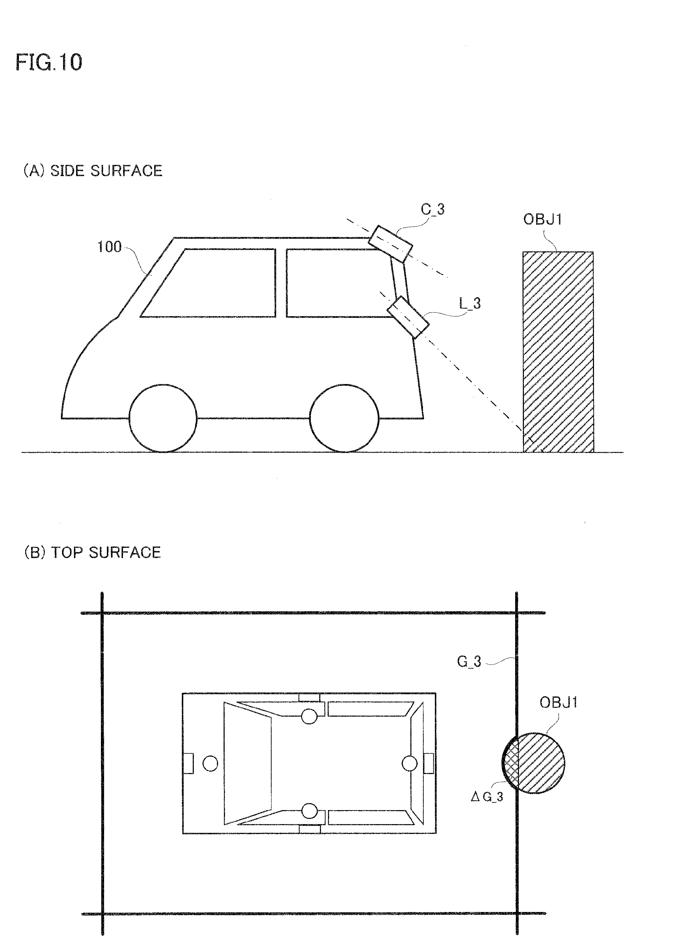

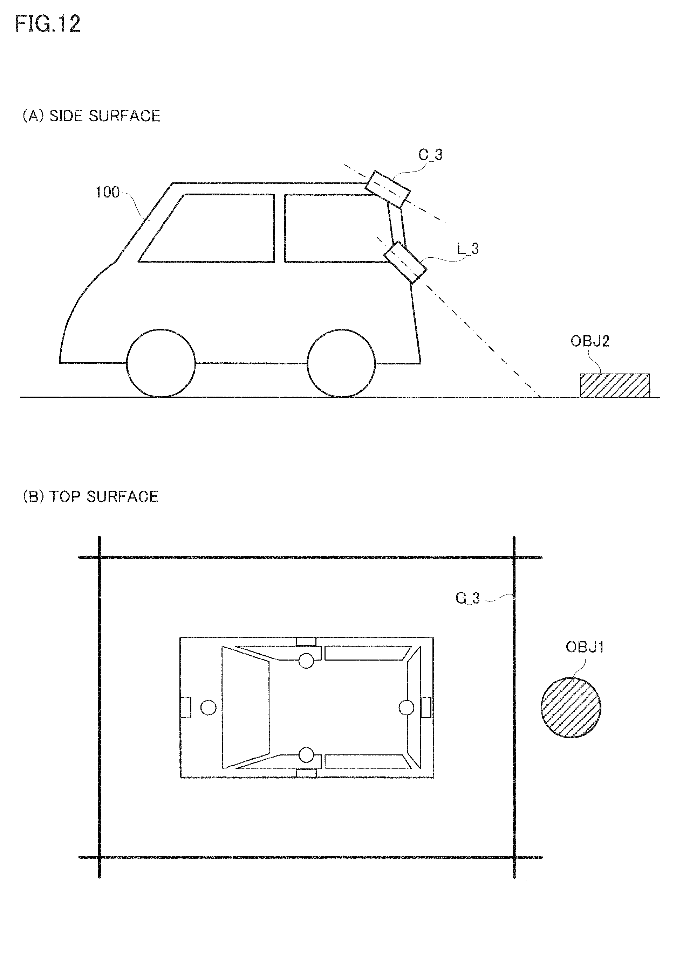

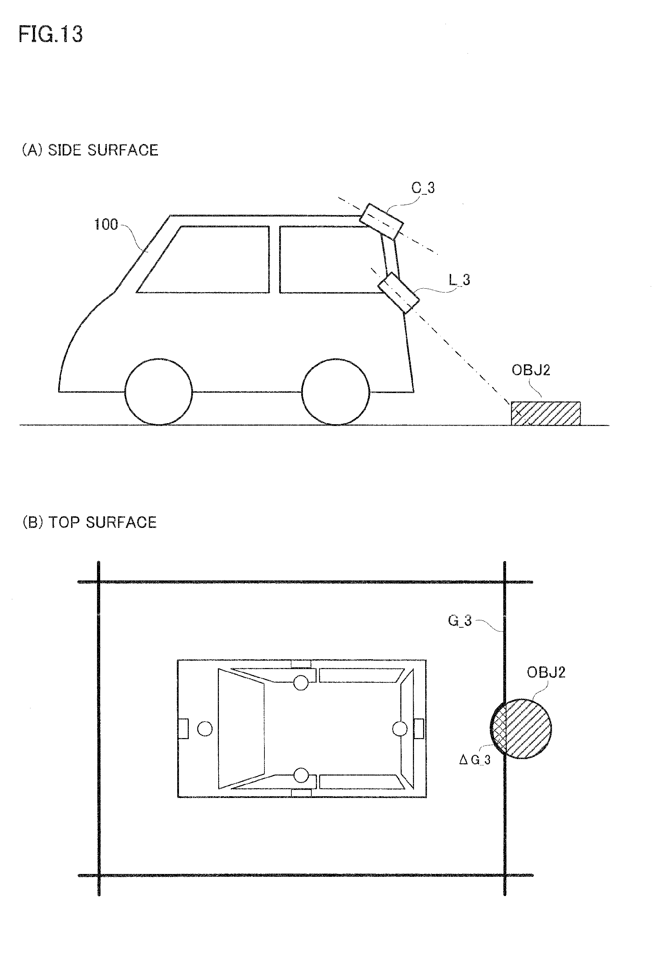

When the automobile 100 approaches to a rearward obstacle OBJ1 as shown in Figure 9 (A) and Figure 10 (A), the bright line G_3 appeared in the bird's-eye view image BEV_3 changes as shown in Figure 9 (B) and Figure 10 (B). Also, when the automobile 200 approaches to a rearward obstacle OBJ2 as shown in Figure 12 (A) and Figure 13 (A), the bright line G_3 appeared in the bird's-eye view image BEV_3 changes as shown in Figure 12 (B) and Figure 13 (B). In this case, a size of a distortion portion of the bright line G_3 shown in Figure 10 (B) and Figure 13 (B) is equivalent to the change amount ΔG_N.

The CPU 12p compares the detected change amount ΔG_N to a reference REF so as to update the variable N if ΔG_N≦ REF is established. When the variable N before updating is "1", the variable N after updating indicates "2", and when the variable N before updating is "2", the variable N after updating indicates "3". Moreover, when the variable N before updating is "3", the variable N after updating indicates "4", and when the variable N before updating is "4", the variable N after updating indicates "1". Thus, the variable N is cyclically updated. Upon completion of an updating process of the variable N, the CPU 12p returns to the above-described process.

On the other hand, when ΔG_N>REF is established, the CPU 12p changes an irradiating direction of a laser irradiator L_N upward by a predetermined angle. The predetermined angle is equivalent to an angle of the bright line G_N being outside of a viewing field VW_N of a camera C_N in a case where the obstacle does not exist in the surrounding area of the automobile 100.

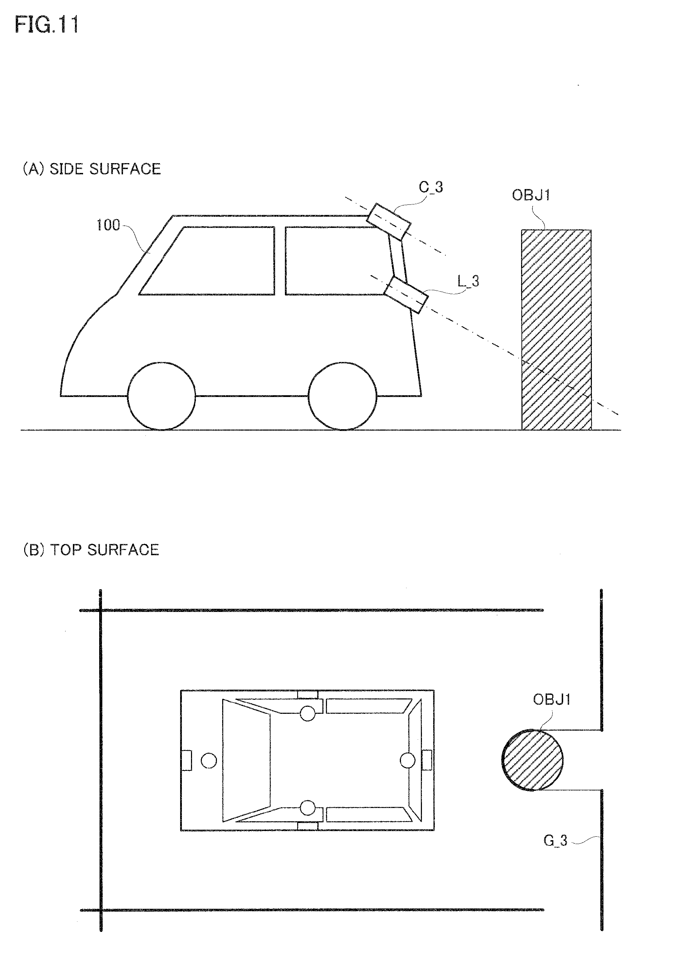

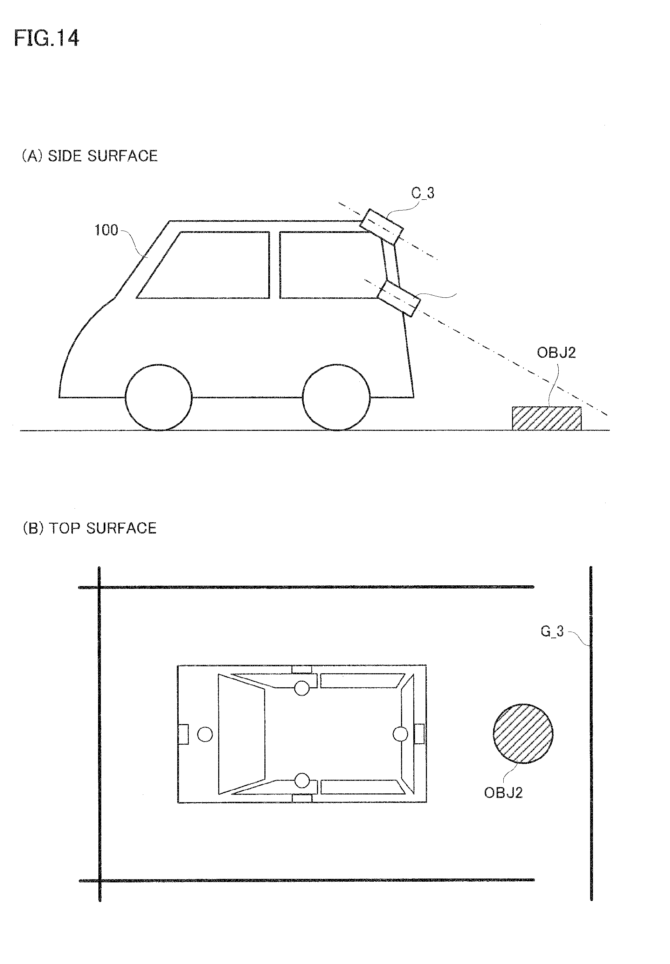

When an irradiating direction of the laser irradiator L_3 is changed upward by the predetermined angle in a state of Figure 10 (A) and (B), the laser beam is radiated as shown in Figure 11 (A), and the bright line G_3 is depicted on the obstacle OBJ1 and the ground as shown in Figure 11 (B). Moreover, when the irradiating direction of the laser irradiator L_3 is changed upward by the predetermined angle in a state of Figure 13 (A) and (B), the laser beam is radiated as shown in Figure 14 (A), and the bright line G_3 is depicted on the ground as shown in Figure 14 (B).

After the irradiating direction of the laser irradiator L_N is changed, the CPU 12p duplicates the bird's eye view image BFV_N held in the work area W1 into the work area W3 so as to determine whether or not the bright line G_N disappeared from the duplicated bird's eye view image BEV_N. If at least one portion of the bright line G_N appears in the bird's eye view image BEV_N, the CPU 12p controls a warning lamp 18 arranged at a dashboard so as to issue a warning colored red. In contrary, if no bright line G_N appears in the bird's eye view image BEV_N, the warning lamp 18 is controlled so as to issue a warning colored yellow.

According to Figure 11 (B), a portion of the bright line G_3 appears in the bird's eye view image BEV_ 3. In contrary, according to Figure 14 (B), the bright line G_3 completely disappears from the bird's eye view image BEV_3. Thus, the warning lamp 18 issues the warning colored red corresponding to the obstacle OBJ1 and issues the warning colored yellow corresponding to the obstacle OBJ2.

When a driver performs a warning stop operation toward an operation panel 20 after the warning is thus issued, the CPU 12p stops the warning lamp 18, restores the irradiating direction of the laser irradiator L_N, and thereafter returns to the above-described process.

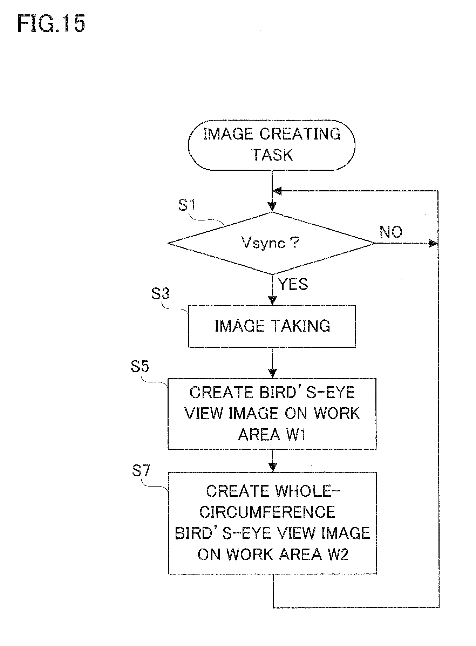

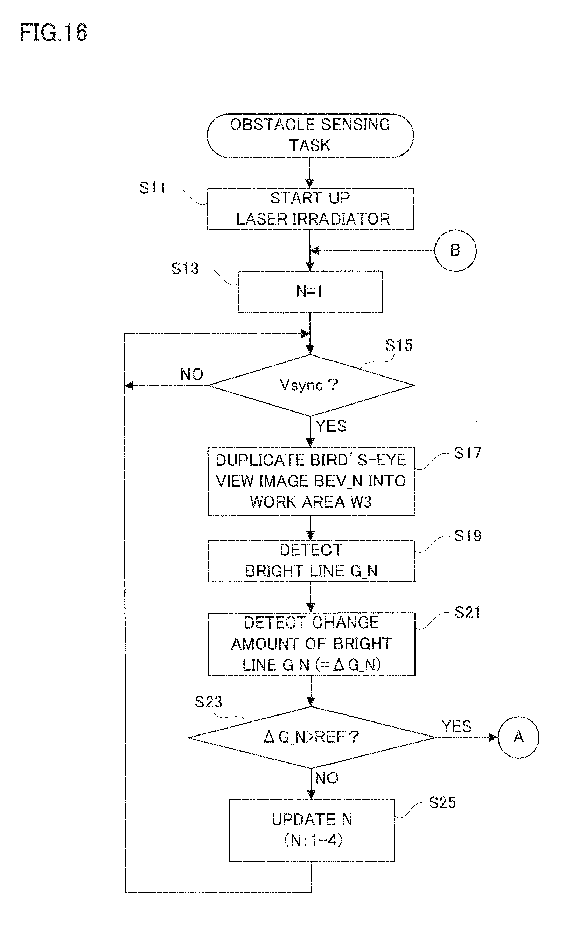

Specifically, the CPU 12p executes a plurality of tasks including an image creating task shown in Figure 15 and an obstacle sensing task shown in Figure 16 to Figure 17, in a parallel manner. It is noted that control programs corresponding to these tasks are stored in a flash memory 14 (see Figure 1).

With reference to Figure 15, when the vertical synchronization signal Vsync is generated, the process advances from step S1 to step S3 so as to respectively take the scene images P_1 to P_4 from the cameras C_1 to C_4. In a step S5, the bird's-eye view images BEV_1 to BEV_4 are created based on the taken scene images P_1 to P_4. The created bird's-eye view images BEV_1 to BEV_4 are held in the work area W1.

In a step S7, the whole-circumference bird's-eye view image is created by combining the bird's-eye view images BEV_1 to BEV_4 on the work area W1. The created whole-circumference bird's-eye view image is held in the work area W2. On the monitor screen of the display device 16, the maneuvering assisting image based on the whole-circumference bird's-eye view image held in the work area W2 is displayed. Upon completion of the process in the step S7, the process returns to the step S1.

With reference to Figure 16, in a step S11, the laser irradiators L_1 to L_4 are started up, and in a step S 13, the variable N is set to "1". When the vertical synchronization signal Vsync is generated, the process advances from a step S15 to a step S 17 so as to duplicate the bird's eye view image BEV_N which is on the work area W1 into the work area W3. In a step S19, the bright line G_N is detected from the duplicated bird's eye view image BEV_N, and in a step S21, the change amount of the bright line G_N is detected as "ΔG_N". In a step S23, it is determined whether or not the detected change amount ΔG_N exceeds the reference REF, and if NO is determined, the process returns to the step S 15 via the process in a step S25 while if YES is determined, the process returns to the step S15 via the processes in steps S27 to S41.

In the step S25, the variable N is updated among "1" to "4". When the variable N before updating is "1", the variable N after updating indicates "2", and when the variable N before updating is "2", the variable after updating indicates "3". Moreover, when the variable N before updating is "3", the variable N after updating indicates "4", and when the variable N before updating is "4", the variable after updating indicates "1".

In the step S27, the irradiating direction of the laser irradiator L_N is changed upward by a predetermined angle. When the vertical synchronization signal Vsync is generated, the process advances from the step S29 to the step S31 so as to duplicate the bird's-eye view image BEV_N of a subsequent frame held in the work area W1 into the work area W3. In the step S33, it is determined whether or not the bright line G_N is disappeared from the duplicated bird's-eye view images BEV_N. When no bright line G_N is detected from the bird's eye view image BEV_N, the process advances to the step S35 while when at least one portion of the bright line G_N is detected from the bird's eye view image BEV_N, the process advances to the step S37.

In the step S35, the warning lamp 18 is controlled so as to issue the warning colored yellow. In the step S37, the warning lamp 18 is controlled so as to issue the warning colored red. Upon completion of the process in the step S35 or S37, it is determined in the step S39 whether or not the warning stop operation is performed. When a determined result is updated from NO to YES, the warning lamp 18 is stopped in the step S41, the irradiating direction of the laser irradiator L_N is restored in a step S43, and thereafter the process returns to the step S 13.

As can be seen from the above-described explanation, the laser irradiator L_N (N:1 to 4) is arranged on the automobile 100 and radiates the laser beam obliquely downward. The radiated laser beam depicts the bright line G_N on the ground. The camera. C_N arranged on the automobile 100 has the viewing field VW_N corresponding to a radiating direction of the laser irradiator L_N.

The CPU 12p determines whether or not a change amount in a reflection position of the laser beam radiated by the laser irradiator L_N, i.e., the change amount of the bright line G_N exceeds the reference REF, based on output of the camera C_N (S23). The radiating direction of the laser irradiator L_N is changed by the CPU 12p when a determined result is updated from a negative result to a positive result (S27).

A changing manner of the bright line G_N is detected by the CPU 12p based on the output of the camera C_N parallel to a changing process for the radiating direction (S33). The CPU 12p outputs a different notification corresponding to the detected result toward the driver of the automobile 100 (S35, S37).

Thus, the radiating direction of the laser irradiator L_N is changed when the change amount of the bright line G_N exceeds the reference REF. Moreover, the notification outputted toward the driver of the automobile 100 differs corresponding to the changing manner of the bright line G_N. Thereby, it becomes possible to ensure a detection accuracy of the obstacle while a throughput is inhibited.

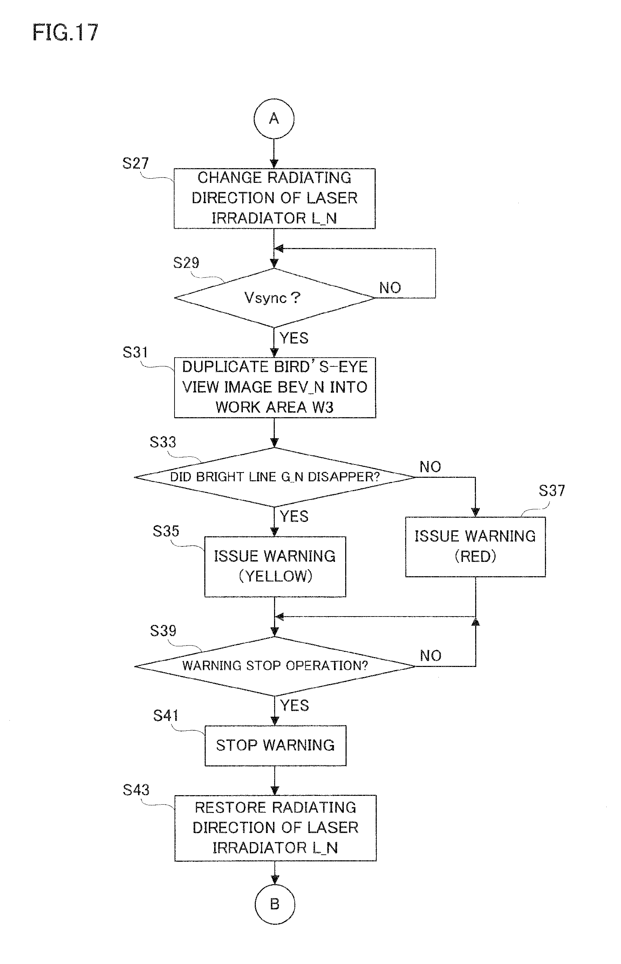

It is noted that, in this embodiment, orientations of the cameras C_1 to C_4 are fixed, and orientations of the laser irradiators L_1 to L_4 are also fixed except being changed upward in the step S27 shown in Figure 17. Moreover, the variable N is cyclically updated among "1" to "4".

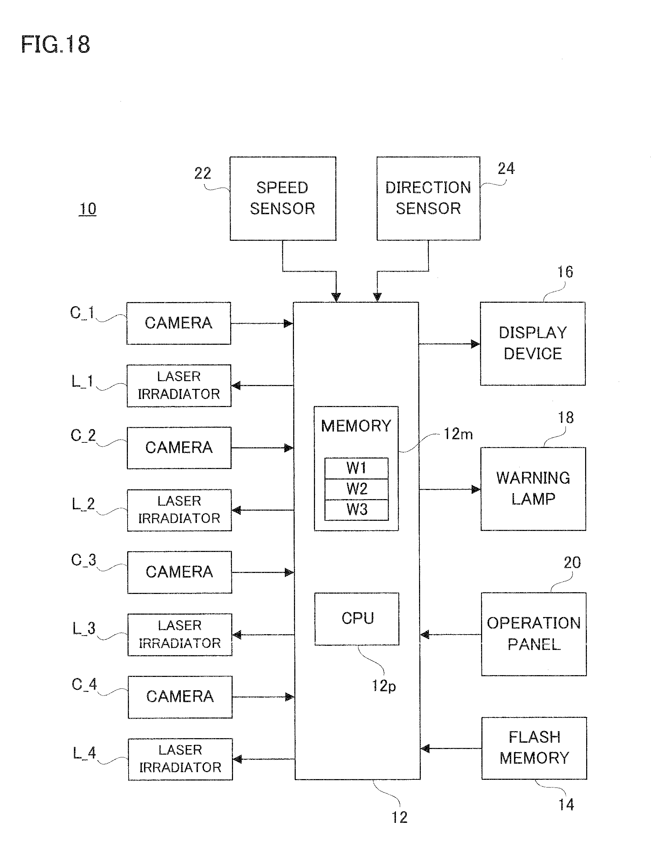

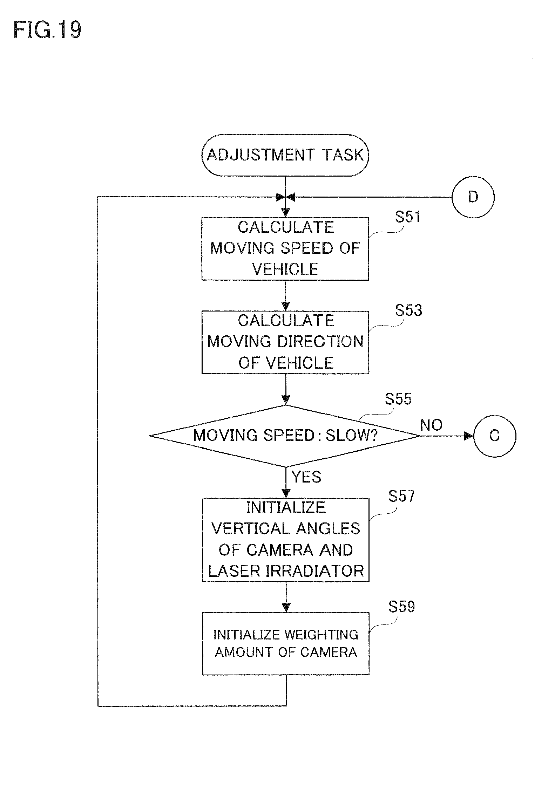

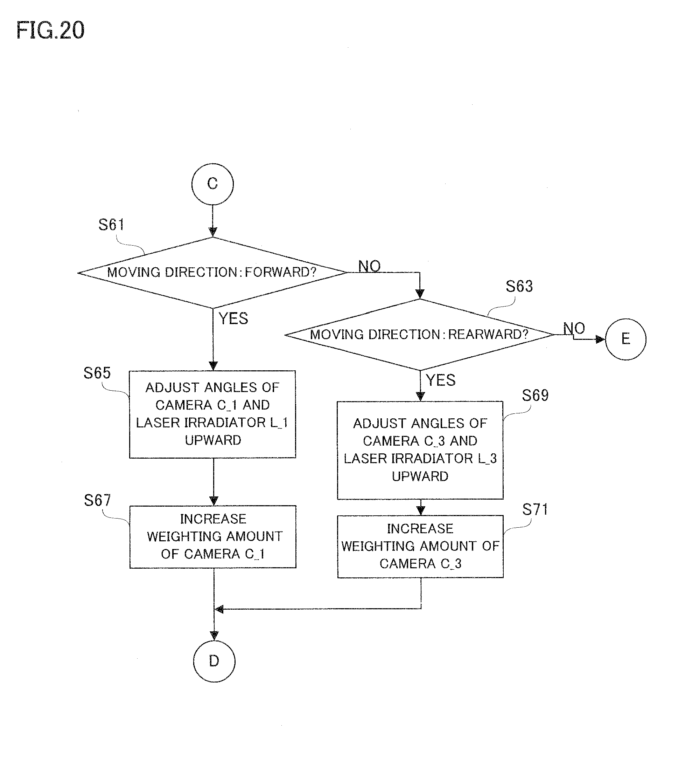

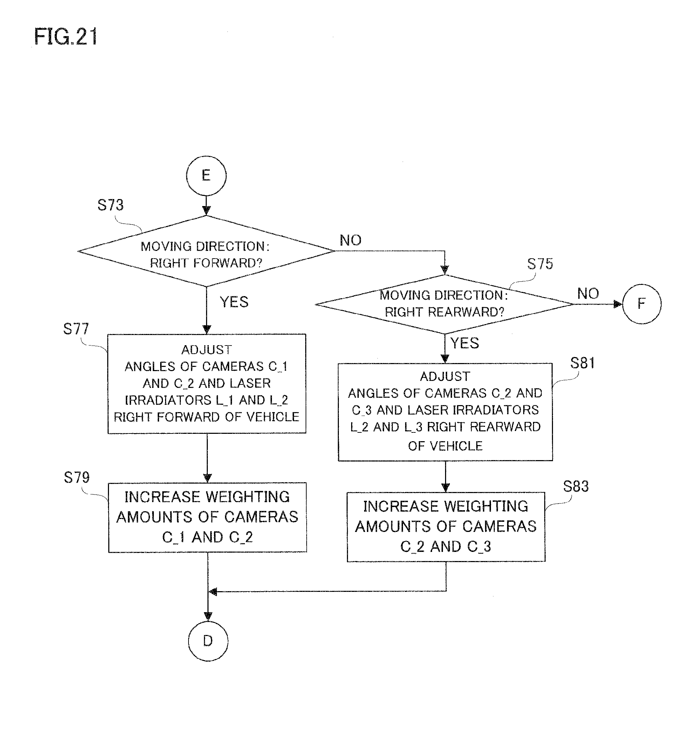

However, a speed sensor 22 which detects a moving speed of the automobile 100 and a direction sensor 24 which detects a moving direction of the automobile 100 may be optionally added as shown in Figure 18 so that the orientations of the cameras C_1 to C_4 and the laser irradiators L_1 to L_4 and an updating manner of the variable N are adjusted based on output of the speed sensor 22 and the direction sensor 24. In this case, preferably, the CPU 12p executes an adjustment task shown in Figure 19 to Figure 21.

With reference to Figure 19, in a step S51, the moving speed of the automobile 100 is calculated based on the output of the speed sensor 22, and in a step S53, the moving direction of the automobile 100 is calculated based on the output the direction sensor 24. In a step S55, it is determined whether or not the moving speed is slow (i.e., whether or not the moving speed falls below a threshold value), in a step 561, it is determined whether or not the moving direction is forward, and in a step S63, it is determined whether or not the moving direction is rearward. Furthermore, in a step S73, it is determined whether or not the moving direction is right forward, in a step S75, it is determined whether or not the moving direction is right rearward, and in a step S85, it is determined whether or not the moving direction is left forward.

When YES is determined in the step S55, the angles of the cameras C_1 to C_4 (the imaging directions) and the angles of the laser irradiators L_1 to L_4 (the radiating directions) are initialized in a step S57, and weighting amounts of the cameras C_1 to C_4 are initialized in a step S59. Upon completion of the process in the step S59, the process returns to the step S51.

It is noted that the weighting amounts of the cameras C_1 to C_4 are parameters for adjusting the updating manner of the variable N. The variable N is preferentially set to the number of a camera which is larger in the weighting amount. For example, in a case where the weighting amount of the camera C_1 is the largest and the weighting amount of the camera C_3 is the smallest, the cycle in which variable N is updated to "1" becomes the shortest and the cycle in which the variable N is updated to "3" becomes the longest.

When YES is determined in the step S61, it is regarded that the automobile 100 is moving forward at high speed (speed equal to or more than the threshold value) and therefore, the angles of the camera C_1 and the laser irradiator L_1 are adjusted upward in a step S65. Also, the weighting amount of the camera C_1 is increased in a step S67. Upon completion of the process in the step S67, the process returns to the step S51.

When YES is determined in the step S63, it is regarded that the automobile 100 is moving rearward at high speed, and therefore, the angles of the camera C_3 and the laser irradiator L_3 are adjusted upward in a step S69. Also, the weighting amount of the camera C_3 is increased in a step S71. Upon completion of the process in the step S71, the process returns to the step S51.

When YES is determined in the step S73, it is regarded that the automobile 100 is moving right forward at high speed, and therefore, the angles of the cameras C_1 and C_2 and the laser irradiators L_1 and L_2 are adjusted right forward of the automobile 100 in a step S77. Also, the weighting amount of the cameras C_1 and C_2 are increased in a step S79. Upon completion of the process in the step S79, the process returns to the step S51.

When YES is determined in the step S75, it is regarded that the automobile 100 is moving right rearward at high speed, and therefore, the angles of the cameras C_2 and C_3 and the laser irradiators L_2 and L_3 are adjusted right rearward of the automobile 100 in a step S81. Also, the weighting amount of the cameras C_2 and C_3 are increased in a step S83. Upon completion of the process in the step S83, the process returns to the step S51.

When YES is determined in the step S85, it is regarded that the automobile 100 is moving left forward at high speed, and therefore, the angles of the cameras C_1 and C_4 and the laser irradiators L_1 and L_4 are adjusted left forward of the automobile 100 in a step S87. Also, the weighting amount of the cameras C_1 and C_4 are increased in a step S89. Upon completion of the process in the step S89, the process returns to the step S51.

When NO is determined in the step S85, it is regarded that the automobile 100 is moving left rearward at high speed, and therefore, the angles of the cameras C_3 and C_4 and the laser irradiators L_3 and L_4 are adjusted left rearward of the automobile 100 in a step S91. Also, the weighting amount of the cameras C_3 and C_4 are increased in a step S93. Upon completion of the process in the step S93, the process returns to the step S51.

Moreover, according to this embodiment, an automobile is assumed as a moving body, however, a construction machine or a train may be assumed as the moving body. In a case of the construction machine, since there is a possibility that a ground of a workplace is out of the level, the reference REF referred to in the step S23 shown in Figure 16 is preferably adjusted by considering the flatness of the ground. Moreover, in a case of the train, the laser beam is irradiated in order to detect a passenger in a platform of a station.

Furthermore, in this embodiment, the warning is issued toward the driver of the automobile 100, however, the warning may be issued toward a driver of the outside, i.e., another automobile. Thereby, a possibility to avoid a situation where another automobile is coming to crash is increased.

Moreover, in this embodiment, the laser irradiator L_2 is installed near the center on the right side of the automobile 100, the camera C_2 is installed near the center in the width direction on the right side and on the upper side in the height direction of the automobile 100, the laser irradiator L_4 is installed near the center on the left side of the automobile 100, and the camera C_4 is installed near the center in the width direction on the left side and on the upper side in the height direction of the automobile 100. However, the laser irradiator L_2 and the camera C_2 may be installed at the top and bottom of a door miller on the right side, and the laser irradiator L_4 and the camera C_4 may be installed at the top and bottom of a door miller on the left side.

Moreover, in this embodiment, the irradiation direction of the laser beam is changed upward when ΔG_N that is the change amount of the bright line G_N exceeds the reference REF (see the step S23 in Figure 16 and the step S27 in Figure 17). However, presence or absence of the obstacle or height of the obstacle may be determined by cyclically changing the radiating direction of the laser beam and referring to the detected result of the bright line G_N along with the change of the radiating direction.

Furthermore, in this embodiment, a warning lamp is arranged in order to issue the warning, however, the warning may be issued from a speaker, and may be displayed on the display device.

Moreover, in this embodiment, the bird's-eye view images BEV_1 to BEV_4 are created on the work area W1 of the memory 12m (see the step S5 in Figure 15), the whole-circumference bird's-eye view image is created on the work area W2 of the memory 12m (see the step S7 in Figure 15), and the bird's-eye view images BEV_1 to BEV_4 on the work area W1 are duplicated into the work area W3 (see the step S17 in Figure 16). However, if the processes in the step S 19 shown in Figure 16 and the step S33 shown in Figure 17 are executed on the work area W1, the process of duplicating the bird's-eye view images BEV_1 to BEV_4 becomes unnecessary.

Furthermore, in this embodiment, a single obstacle sensing task shown in Figure 16 to Figure 17 is prepared, and the variable N is updated among "1" to "4" in the step S25 shown in Figure 16. However, four obstacle sensing tasks respectively corresponding to the cameras C_1 to C_4 may be prepared so as to execute these tasks in a parallel manner. In this case, the process of updating the variable N becomes unnecessary.

Moreover, according to Figure 11 (A) or Figure 14 (A), a posture of the laser irradiator is changed in order to change the radiating direction of the laser beam. However, in reality, the irradiating direction of the laser beam is changed by adjusting an optical system.

Notes relating to the above-described embodiment will be shown below. It is possible to arbitrarily combine these notes with the above-described embodiment unless any contradiction occurs.

The coordinate transformation for producing a bird's-eye view image from a photographed image, which is described in the embodiment, is generally called a perspective projection transformation. Instead of using this perspective projection transformation, the bird's-eye view image may also be optionally produced from the photographed image through a well-known planer projection transformation. When the planer projection transformation is used, a homography matrix (coordinate transformation matrix) for transforming a coordinate value of each pixel on the photographed image into a coordinate value of each pixel on the bird's-eye view image is evaluated in advance at a stage of a camera calibrating process. A method of evaluating the homography matrix is well known. Then, during image transformation, the photographed image may be transformed into the bird's-eye view image based on the homography matrix. In either way, the photographed image is transformed into the bird's-eye view image by projecting the photographed image on the bird's-eye view image.

Although the present invention has been described and illustrated in detail, it is clearly understood that the same is by way of illustration and example only and is not to be taken by way of limitation, the spirit and scope of the present invention being limited only by the terms of the appended claims.

**REFERENCE SIGNS LIST**

10 ···maneuvering assisting apparatus
C_1 to C_4··· camera
L_1 to L_4···laser irradiator
12···image processing circuit
12p···CPU
12m···memory
14···flash memory
16···display device
18···warning lamp
22···speed sensor
24···direction sensor
100···automobile

**Claims**

1. A maneuvering assisting apparatus, comprising:

   a radiating means, arranged in a moving body, which radiates a light beam obliquely downward;
   an imaging means, arranged in said moving body, which has a viewing field corresponding to a radiating direction of said radiating means;
   a determining means which determines whether or not a change amount in a reflection position of the light beam radiated by said radiating means exceeds a reference, based on output of said imaging means;
   a changing means which changes the radiating direction of said radiating means when a determined result of said determining means is updated from a negative result to a positive result;
   a detecting means which detects a manner of changing in the reflection position of the light beam radiated by said radiating means based on the output of said imaging means parallel to a changing process of said changing means; and
   a notifying means which outputs a different notification corresponding to a detected result of said detecting means toward an operator of said moving body.

2. A maneuvering assisting apparatus according to claim 1, wherein said radiating means radiates a linear light beam extending in right and left directions of the viewing field of said imaging means, and said changing means changes said radiating direction to an upper direction.

3. A maneuvering assisting apparatus according to claim 1, wherein said detecting means includes a first notifying means which outputs said notification in a first manner when the detected result of said detecting means indicates the reflecting light beam being disappeared, and a second notifying means which outputs said notification in a second manner when the detected result of said detecting means indicates at least one portion of the reflecting light beams being detected.

4. A maneuvering assisting apparatus according to claim 1, further comprising a creating means which creates a bird's eye view image based on the output of said imaging means,
   wherein said determining means and said detecting means respectively execute a determining process and a detecting process with reference to the bird's eye view image created by said creating means.

5. A maneuvering assisting apparatus according to claim 1, wherein
   said imaging means includes a plurality of cameras arranged on a periphery of said moving body,
   said radiating means includes a plurality of laser irradiators respectively allocated to the plurality of cameras, and
   said maneuvering assisting apparatus further comprising an updating means which repeatedly updates a camera and a laser irradiator noticed for the determining process of said determining means.

6. A maneuvering assisting apparatus according to claim 1, further comprising a setting means which sets an updating manner of said updating means to a different manner corresponding to at least one of a moving speed of said moving body and a moving direction of said moving body.

FIG.1

10

16

C_1 — CAMERA

L_1 — LASER IRRADIATOR

C_2 — CAMERA

L_2 — LASER IRRADIATOR

C_3 — CAMERA

L_3 — LASER IRRADIATOR

C_4 — CAMERA

L_4 — LASER IRRADIATOR

MEMORY 12m

W1
W2
W3

CPU

12p

12

DISPLAY DEVICE

WARNING LAMP 18

OPERATION PANEL 20

FLASH MEMORY 14

FIG.2

(A) FRONT SIDE

100

C_1

L_1

(B) RIGHT SIDE

C_2

100

L_2

(C) REAR SIDE

C_3

100

L_3

(D) LEFT SIDE

C_4

100

L_4

FIG.3

FIG.4

(A) BIRD'S-EYE VIEW IMAGE BEV_1

X1

Y1

(B) BIRD'S-EYE VIEW IMAGE BEV_2

X2

Y2

(C) BIRD'S-EYE VIEW IMAGE BEV_3

X3

Y3

(D) BIRD'S-EYE VIEW IMAGE BEV_4

X4

Y4

FIG.5

FIG.6

D2

D1

FIG.7

FIG.8

# FIG.9

(A) SIDE SURFACE

(B) TOP SURFACE

# FIG.10

(A) SIDE SURFACE

(B) TOP SURFACE

# FIG.11

(A) SIDE SURFACE

(B) TOP SURFACE

# FIG.12

(A) SIDE SURFACE

(B) TOP SURFACE

# FIG.13

(A) SIDE SURFACE

(B) TOP SURFACE

# FIG.14

(A) SIDE SURFACE

C_3

100

OBJ2

(B) TOP SURFACE

G_3

OBJ2

FIG.15

```
        ┌─────────────────────┐
        │   IMAGE CREATING    │
        │        TASK         │
        └─────────────────────┘
                   │
                   ▼◄─────────────────────┐
    S1          ╱────────╲                │
             ╱──           ──╲     NO      │
            ◄    Vsync ?       ►──────────►│
             ╲──           ──╱             │
                ╲────────╱                 │
                   │ YES                   │
    S3             ▼                       │
        ┌─────────────────────┐           │
        │    IMAGE TAKING     │           │
        └─────────────────────┘           │
                   │                       │
    S5             ▼                       │
        ┌─────────────────────┐           │
        │  CREATE BIRD'S-EYE   │           │
        │  VIEW IMAGE ON WORK  │           │
        │       AREA W1        │           │
        └─────────────────────┘           │
                   │                       │
    S7             ▼                       │
        ┌─────────────────────┐           │
        │   CREATE WHOLE-      │           │
        │   CIRCUMFERENCE      │           │
        │ BIRD'S-EYE VIEW IMAGE│           │
        │   ON WORK AREA W2    │           │
        └─────────────────────┘           │
                   │                       │
                   └───────────────────────┘
```

## FIG.16

OBSTACLE SENSING
TASK

S11 — START UP
LASER IRRADIATOR

B

S13 — N=1

NO ← S15 Vsync ?

YES

DUPLICATE BIRD'S-EYE
VIEW IMAGE BEV_N INTO
WORK AREA W3 — S17

DETECT
BRIGHT LINE G_N — S19

DETECT CHANGE
AMOUNT OF BRIGHT
LINE G_N (=△G_N) — S21

S23 △G_N>REF ? YES → A

NO

UPDATE N
(N:1-4) — S25

FIG.17

A

S27 CHANGE RADIATING
DIRECTION OF LASER
IRRADIATOR L_N

S29 Vsync？ —NO→

YES

S31 DUPLICATE BIRD'S-EYE
VIEW IMAGE BEV_N INTO
WORK AREA W3

S33 DID BRIGHT LINE G_N DISAPPER? —NO→

YES

S35 ISSUE WARNING
(YELLOW)

S37 ISSUE WARNING
(RED)

S39 WARNING STOP OPERATION? —NO→

YES

S41 STOP WARNING

S43 RESTORE RADIATING
DIRECTION OF LASER
IRRADIATOR L_N

B

FIG.18

FIG.19

```
                    ( ADJUSTMENT TASK )
                            │
   ┌───────────────►────────┼────────◄─────────────────( D )
   │                        ▼
   │              ┌──────────────────┐    S51
   │              │    CALCULATE     │
   │              │ MOVING SPEED OF  │
   │              │     VEHICLE      │
   │              └──────────────────┘
   │                        │
   │                        ▼
   │              ┌──────────────────┐    S53
   │              │    CALCULATE     │
   │              │ MOVING DIRECTION │
   │              │    OF VEHICLE    │
   │              └──────────────────┘
   │                        │
   │                        ▼               S55
   │                   ╱─────────╲       NO
   │             ◄────( MOVING SPEED : SLOW? )────►( C )
   │                   ╲─────────╱
   │                        │ YES
   │                        ▼
   │              ┌──────────────────┐    S57
   │              │    INITIALIZE    │
   │              │  VERTICAL ANGLES │
   │              │   OF CAMERA AND  │
   │              │ LASER IRRADIATOR │
   │              └──────────────────┘
   │                        │
   │                        ▼
   │              ┌──────────────────┐    S59
   │              │ INITIALIZE WEIGHTING │
   │              │  AMOUNT OF CAMERA │
   │              └──────────────────┘
   │                        │
   └────────────────────────┘
```

30

FIG.20

C

S61

MOVING DIRECTION : FORWARD?    NO

YES

S63

MOVING DIRECTION : REARWARD?    NO    E

S65

ADJUST ANGLES OF
CAMERA C_1 AND
LASER IRRADIATOR L_1
UPWARD

YES

S69

ADJUST ANGLES OF
CAMERA C_3 AND
LASER IRRADIATOR L_3
UPWARD

S67

INCREASE
WEIGHTING AMOUNT
OF CAMERA C_1

S71

INCREASE
WEIGHTING AMOUNT OF
CAMERA C_3

D

FIG.21

E

S73

MOVING DIRECTION:
RIGHT FORWARD?

NO

YES

S75

MOVING DIRECTION:
RIGHT REARWARD?

NO

F

S77

ADJUST
ANGLES OF CAMERAS C_1
AND C_2 AND LASER
IRRADIATORS L_1 AND L_2
RIGHT FORWARD OF VEHICLE

YES

S81

ADJUST
ANGLES OF CAMERAS C_2 AND
C_3 AND LASER IRRADIATORS
L_2 AND L_3 RIGHT REARWARD
OF VEHICLE

S79

INCREASE WEIGHTING
AMOUNTS OF CAMERAS
C_1 AND C_2

S83

INCREASE WEIGHTING
AMOUNTS OF CAMERAS
C_2 AND C_3

D

# FIG.22

```
                    ( F )
                      |
S85                   ▼
        ◇ MOVING DIRECTION:        NO
        ◇   LEFT FORWARD?    ──────────┐
                      |                 |
                   YES|                 ▼
                      |        ┌─────────────────────┐
S87                   |        │       ADJUST        │ S91
        ┌─────────────────┐    │ ANGLES OF CAMERAS C_3│
        │     ADJUST      │    │  AND C_4 AND LASER   │
        │ANGLES OF CAMERAS C_1│ │ IRRADIATORS L_3 AND L_4│
        │ AND C_4 AND LASER │   │LEFT REARWARD OF VEHICLE│
        │IRRADIATORS L_1 AND L_4│ └─────────────────────┘
        │LEFT FORWARD OF VEHICLE│           |
        └─────────────────┘                |
                      |                     ▼
S89                   ▼        ┌─────────────────────┐
        ┌─────────────────┐    │ INCREASE WEIGHTING  │ S93
        │INCREASE WEIGHTING│   │ AMOUNTS OF CAMERAS  │
        │AMOUNTS OF CAMERAS│   │    C_3 AND C_4      │
        │   C_1 AND C_4   │    └─────────────────────┘
        └─────────────────┘               |
                      |                    |
                      ◄────────────────────┘
                      |
                      ▼
                    ( D )
```

## INTERNATIONAL SEARCH REPORT

International application No.

PCT/JP2009/065575

### A. CLASSIFICATION OF SUBJECT MATTER

G08G1/16(2006.01)i, B60R1/00(2006.01)i, B60R21/00(2006.01)i, H04N5/225
(2006.01)i, H04N7/18(2006.01)i

According to International Patent Classification (IPC) or to both national classification and IPC

### B. FIELDS SEARCHED

Minimum documentation searched (classification system followed by classification symbols)

G08G1/16, B60R1/00, B60R21/00, H04N5/225, H04N7/18

Documentation searched other than minimum documentation to the extent that such documents are included in the fields searched

| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| E,X | JP 2009-205360 A (Nissan Motor Co., Ltd.), 10 September, 2009 (10.09.09), Claims 1, 2; Par. Nos. [0008] to [0060]; Figs. 1 to 16 (Family: none) | 1-6 |
| A | JP 2003-231438 A (Toyota Motor Corp.), 19 August, 2003 (19.08.03), Page 1, lower left column & US 2003/0147247 A1 & EP 1334869 A2 | 1 |
| A | JP 2002-36987 A (Nissan Motor Co., Ltd.), 06 February, 2002 (06.02.02), Page 1, lower left column (Family: none) | 1 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 September, 2009 (17.09.09) | 06 October, 2009 (06.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002036987 A